# EUROPEAN PATENT APPLICATION

(11) **EP 3 599 582 A1**
(43) Date of publication of application: **29.01.2020**
(21) Application number: 19186783.7
(22) Date of filing: 17.07.2019
(51) Int. Cl.: G06Q 30/02

(54) **PURCHASING ASSISTING METHOD AND DEVICE**

(30) Priority: 27.07.2018 CN 201810840043
(71) Applicant: BSH Hausgeräte GmbH, 81739 München (DE)
(72) Inventor: Wu, Tianlu, Nanjing, Jiangsu 210046 (CN); Lei, Dongyong, Nanjing, Jiangsu 210046 (CN); Zhu, Ling, Nanjing City, Jiangsu 210046 (CN); Li, Xuyuan, Nanjing, Jiangsu 210046 (CN); Ge, Bo, Nanjing, Jiangsu 210046 (CN); Bai, Xuemei, Nanjing, Jiangsu 210046 (CN)

(57) **Abstract**

A purchasing assisting method, a purchasing assisting device, and a purchasing assisting system are disclosed. The purchasing assisting method includes: obtaining a to-be-purchased food material; obtaining price data based on the to-be-purchased food material and location data and according to a price database, the price data including the to-be-purchased food material and an actual price of the to-be-purchased food material; and obtaining a reference price of the to-be-purchased food material according to the price data. The price data can provide a reference price during purchasing and is related to the location data, so that the method is more applicable to purchasing in Asian food markets and can effectively assist in food material purchasing for users.

## Description

The present invention relates to the field of household appliance technologies, and in particular, to a purchasing assisting method, a purchasing assisting device, and a purchasing assisting system.

With development of science and technology, connectivity between household appliances in a household system can provide a variety of convenience for users. The connectivity between food storage devices such as refrigerators can effectively improve convenience in diet planning for users, reduce food waste, and increase the efficiency of food use.

On the other hand, purchasing a food material in Asian markets, especially purchasing a fresh food material, is usually done in free food markets. In food markets, a price is relatively freely set and there is particular bargaining space. However, due to a limited information obtaining capability, users are usually unable to determine appropriate bargaining space to achieve a successful bargain.

The present invention provides a purchasing assisting method, a purchasing assisting device, and a purchasing assisting system, to provide a reference price during purchasing, and the reference price is related to location data. Therefore, the purchasing assisting method, the purchasing assisting device, and the purchasing assisting system are more applicable to purchasing in Asian food markets and can effectively assist in food material purchasing for users.

To resolve the above problem, the present invention provides a purchasing assisting method, including: obtaining a to-be-purchased food material; obtaining price data based on the to-be-purchased food material and location data and according to a price database, the price data including the to-be-purchased food material and an actual (i.e. current) price of the to-be-purchased food material; and obtaining a reference price of the to-be-purchased food material according to the price data.

In the purchasing assisting method, the price data can provide a reference price during purchasing and is related to the location data, so that the method is more applicable to purchasing in Asian food markets and can effectively assist in food material purchasing for users.

Optionally, the price database includes: a food material, an actual price of the food material, and a purchasing location corresponding to the actual price; and the step of obtaining price data includes: obtaining the location data; obtaining a target region based on the location data; and obtaining the price data based on the to-be-purchased food material and the target region and according to the price database, the purchasing location that corresponds to the actual price in the price data being located in the target region.

Optionally, the step of obtaining a target region includes obtaining the target region based on the location data in combination with a preset comparison radius.

A target region is obtained based on real-time location data in combination with a preset comparison radius, so that the accuracy of the target region is effectively improved, thereby facilitating the accuracy and real-time performance of the price data and improving the effect of assistance in the purchasing.

Optionally, the price data further includes: a purchasing time corresponding to the actual price; and the step of obtaining a reference price of the to-be-purchased food material includes: obtaining a current date; obtaining a valuation period according to the current date and a preset valuation duration; obtaining a plurality of sample prices of the to-be-purchased food material according to the price data and the valuation period, the sample price being an actual price of the to-be-purchased food material when a purchasing time is within the valuation period; and obtaining the reference price according to the plurality of sample prices.

Optionally, before the obtaining a to-be-purchased food material, the method further includes: obtaining a shopping list, the shopping list including at least one to-be-purchased food material; and the step of obtaining a to-be-purchased food material includes obtaining the to-be-purchased food material based on the shopping list.

Based on the shopping list, the purchasing efficiency of the users can be effectively improved and omitting food materials can be avoided under the purchase plan, thereby improving the assistance effect.

Optionally, after the reference price is obtained, the method further includes: obtaining an actual purchase price of the to-be-purchased food material entered by a user and an actual purchasing quantity of the to-be-purchased food material entered by the user; and sending the to-be-purchased food material, the actual purchase price, and the actual purchasing quantity to a personal user account at a cloud service.

The food material, the actual price of the food material, and the actual purchasing quantity of the food material are sent to the cloud service, so that the security of user data is effectively ensured and a foundation is provided for the users to query at any time, thereby effectively improving the convenience.

Optionally, after the reference price is obtained, the method further includes: obtaining an actual purchase price of the to-be-purchased food material entered by a user and an actual purchasing quantity of the to-be-purchased food material entered by the user; and sending the to-be-purchased food material, the actual purchase price, and the actual purchasing quantity to a household terminal.

The to-be-purchased food material, the actual price of the to-be-purchased food material, and the actual purchasing quantity of the to-be-purchased food material are sent to the household terminal instead of manually entering the to-be-purchased food material, the actual price of the to-be-purchased food material, and the actual purchasing quantity of the to-be-purchased food material again by the user, thereby effectively reducing repeated entering, and simplifying user operations.

Optionally, after the reference price is obtained, the method further includes: sending the to-be-purchased food material, the location data, and an actual purchase price of the to-be-purchased food material entered by a user to the price database.

The food material, the location information of the food material, and the actual price of the food material are sent to a cloud service, so that the sharing of user data is implemented, thereby providing a data foundation for a big data technology and improving the accuracy of the price data.

Correspondingly, the present invention further provides a purchasing assisting device, including: an obtaining module, the obtaining module obtaining a to-be-purchased food material; a price module, the price module obtaining price data based on the to-be-purchased food material and location data and according to a price database, the price data including the to-be-purchased food material and an actual price of the to-be-purchased food material; and a processing module, the processing module obtaining a reference price of the to-be-purchased food material according to the price data.

Optionally, the price database includes: a food material, an actual price of the food material, and a purchasing location corresponding to the actual price; and the price module includes: a location unit, the location unit obtaining the location data; a region unit, the region unit obtaining a target region based on the location data; and a price unit, the price unit obtaining the price data based on the to-be-purchased food material and the target region and according to the price database, the purchasing location that corresponds to the actual price in the price data being located in the target region.

Optionally, the region unit obtains the target region based on the location data in combination with a preset comparison radius.

Optionally, the price data further includes: a purchasing time corresponding to the actual price; and the processing module includes: a time unit, the time unit obtaining a current date; a duration unit, the duration unit obtaining a valuation period according to the current date and a preset valuation duration; a sampling unit, the sampling unit obtaining a plurality of sample prices of the to-be-purchased food material according to the price data and the valuation period, and the sample price being an actual price of the to-be-purchased food material when a purchasing time is within the valuation period; and a reference unit, the reference unit obtaining the reference price according to the plurality of sample prices.

Optionally, the purchasing assisting device further includes: a list module, the list module obtaining a shopping list, the shopping list including at least one to-be-purchased food material; and the obtaining module obtaining the to-be-purchased food material from the list module.

Optionally, the purchasing assisting device further includes: an updating module, the updating module obtaining an actual purchase price of the to-be-purchased food material entered by a user and an actual purchasing quantity of the to-be-purchased food material entered by the user; and a synchronization module, the synchronization module sending the to-be-purchased food material, the actual purchase price, and the actual purchasing quantity to a personal user account at a cloud service.

Optionally, the purchasing assisting device further includes: an updating module, the updating module obtaining an actual purchase price of the to-be-purchased food material entered by a user and an actual purchasing quantity of the to-be-purchased food material entered by the user; and a synchronization module, the synchronization module sending the to-be-purchased food material, the actual purchase price, and the actual purchasing quantity to a household terminal.

Optionally, the purchasing assisting device further includes: an updating module, the updating module obtaining an actual purchase price of the to-be-purchased food material entered by a user; and a synchronization module, the synchronization module sending the to-be-purchased food material, the location data, and the actual purchase price to the price database.

In addition, the present invention further provides a purchasing assisting system, including the purchasing assisting device provided by the present invention.

The invention has been described with regard to a method, a device and a system. If not stated otherwise, the features disclosed in relation to one claim category may be applied in analogy to all other claim categories and vice versa.

Compared with the prior art, the technical solutions of the present invention may have the following advantages.

In the purchasing assisting method, the price data can provide the reference price during purchasing and is related to the location data, so that the method is more applicable to purchasing in Asian food markets and can effectively assist in food material purchasing for the users.
FIG. 1 is a schematic flowchart of an embodiment of a purchasing assisting method according to the present invention; and
FIG. 2 is a functional block diagram of an embodiment of a purchasing assisting device according to the present invention.

It can be learned from the related art that there is no method that can assist in purchasing and increase a success rate of bargaining in the Asian food markets in the prior art.

To resolve the above technical problem, the present invention provides a purchasing assisting method, including: obtaining a to-be-purchased food material; obtaining price data based on the to-be-purchased food material and location data and according to a price database, the price data including the to-be-purchased food material and an actual price of the to-be-purchased food material; and obtaining a reference price of the to-be-purchased food material according to the price data.

In the purchasing assisting method, the price data can provide a reference price during purchasing and is related to location data, so that the method is more applicable to purchasing in Asian food markets and can effectively assist in food material purchasing for users.

To make the above objectives, characteristics, and advantages of the present invention more obvious and easier to understand, the specific embodiments of the present invention are described in detail below with reference to the accompanying drawings.

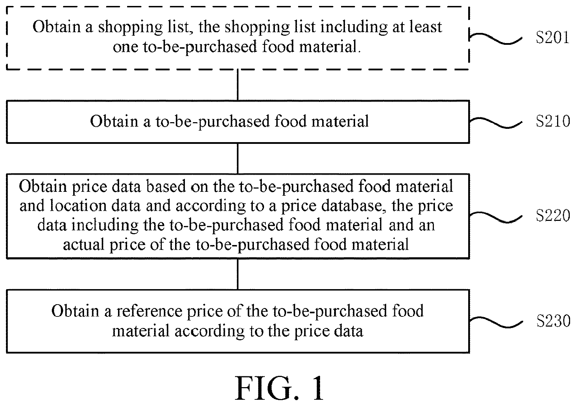

The present invention provides a purchasing assisting method. Specifically, FIG. 1 is a schematic flowchart of an embodiment of the purchasing assisting method.

The purchasing assisting method includes: performing step S210 of obtaining a to-be-purchased food material; performing step S220 of obtaining price data based on the to-be-purchased food material and location data and according to a price database, the price data including the to-be-purchased food material and an actual price of the to-be-purchased food material; and performing step S230 of obtaining a reference price of the to-be-purchased food material according to the price data.

In the purchasing assisting method, the reference price obtained based on the price data can be used as a reference price for a user during purchasing, to effectively improve ability of the user in bargaining; and the price data is related to the location data, so that the obtained reference price is also related to the location data. Therefore, bargaining behavior based on the reference price is more applicable to purchasing in Asian food markets.

The to-be-purchased food material is a purchase target of the user. In this embodiment, before the obtaining a to-be-purchased food material, the method further includes: performing step S201 of obtaining a shopping list, the shopping list including at least one to-be-purchased food material; and the step of obtaining a to-be-purchased food material includes obtaining the to-be-purchased food material based on the shopping list. The user may make a purchase plan in advance to generate and save the shopping list, so that the to-be-purchased food material is obtained based on the shopping list, to effectively improve the efficiency of purchasing behavior of the user, thereby facilitating saving time. In other embodiments of the present invention, the to-be-purchased food material may be directly manually entered by the user, that is, the step of obtaining a to-be-purchased food material includes obtaining the to-be-purchased food material that is entered by the user.

The price data is a data foundation for obtaining the reference price of the to-be-purchased food material. The price data includes the to-be-purchased food material and at least one actual price. The price database is generated through food material purchasing behavior of all users. Specifically, the price database includes the food materials purchased by all the users and actual prices corresponding to the food materials. Therefore, the step of obtaining price data includes: obtaining the price database; querying the price database according to the to-be-purchased food material, and obtaining all actual prices of the to-be-purchased food material.

In addition, the price data is price data in a target region; the price database further includes a purchasing location corresponding to the actual price. Therefore, the step of obtaining price data further includes: obtaining the location data; obtaining the target region based on the location data; and obtaining the price data based on the to-be-purchased food material and the target region and according to the price database, the purchasing location that corresponds to the actual price in the price data being located in the target region.

Specifically, the location data is obtained by using a positioning device. In other embodiments of the present invention, the location data may alternatively be manually entered by the user. In this embodiment, the target region is a circular area with a location indicated by the location data as the center and a preset comparison radius as the radius. Therefore, the step of obtaining a target region includes: obtaining the target region based on the location data in combination with the preset comparison radius.

Therefore, the step of obtaining price data includes: obtaining the price data according to the target region, the purchasing location that corresponds to the actual price in the price data being located in the target region.

It should be noted that, in this embodiment, the to-be-purchased food material is obtained by obtaining the shopping list, and the shopping list includes one or more to-be-purchased food materials. Therefore, in the step of obtaining price data, the price data of all the to-be-purchased food materials on the shopping list is obtained, that is, the price data includes all the to-be-purchased food materials on the shopping list, an actual price of each to-be-purchased food material, and a purchasing location of each actual price, the purchasing location of the actual price being located in the target region. In other embodiments of the present invention, the to-be-purchased food material may alternatively be entered by the user. Therefore, after the user enters the to-be-purchased food material, the price data of the to-be-purchased food material entered by the user is obtained.

The reference price is applicable to provide a reference for user bargaining, thereby assisting in purchasing behavior for the user.

The reference price is an average price of the to-be-purchased food material in the target region in a preset period of time. The price data further includes: a purchasing time corresponding to the actual price. Therefore, the step of obtaining a reference price includes: obtaining a current date; obtaining a valuation period according to the current date and a preset valuation duration; obtaining a plurality of sample prices of the to-be-purchased food material according to the price data and the valuation period, the sample price being an actual price of the to-be-purchased food material when a purchasing time is within the valuation period; and obtaining the reference price according to the plurality of sample prices.

In this embodiment, the reference price is an average price of the plurality of sample prices, that is, the step of obtaining a reference price includes: obtaining the reference price according to an average value of the plurality of sample prices. In other embodiments of the present invention, the reference price may alternatively be obtained according to other statistical methods of the plurality of sample prices.

It should be noted that, in this embodiment, there are a plurality of prestored valuation durations, so that there are also a plurality of valuation periods. Therefore, a plurality of reference prices may be obtained.

Specifically, the valuation durations include: one day, three days, and one week, and in the step of obtaining a valuation period, the valuation period includes: within one day before the current date, within three days before the current date, and within one week before the current date.

The obtaining a plurality of sample prices includes: obtaining a plurality of first sample prices, the first sample prices being actual prices of the to-be-purchased food material when purchasing times are within one day before the current date; obtaining a plurality of second sample prices, the second sample prices being actual prices of the to-be-purchased food material when purchasing times are within three days before the current date; and obtaining a plurality of third sample prices, the third sample prices being actual prices of the to-be-purchased food material when purchasing times are within one week before the current date.

Therefore, the step of obtaining a reference price includes: obtaining a first reference price according to an average value of the plurality of first sample prices; obtaining a second reference price according to an average value of the plurality of second sample prices; and obtaining a third reference price according to an average value of the plurality of third sample prices.

After the reference price is obtained, the purchasing assisting method further includes: informing the user of the reference price, thereby assisting in purchasing behavior for the user. In this embodiment, in the purchasing assisting method, information communication with the user can be implemented by using an interactive terminal. Therefore, in the purchasing assisting method, the interactive terminal is used to inform the user of the reference price through display or voice.

It should be noted that, after the reference price is obtained, the purchasing assisting method further includes: obtaining an actual purchase price of the to-be-purchased food material entered by the user and an actual purchasing quantity of the to-be-purchased food material entered by the user; and sending the to-be-purchased food material, the actual purchase price, and the actual purchasing quantity to a personal user account at a cloud service. Therefore, the behavior of purchasing the food material by the user is recorded in the personal account at the cloud service, to help the user to query relevant data.

In addition, after the reference price is obtained, the purchasing assisting method further includes: obtaining an actual purchase price of the to-be-purchased food material entered by the user and an actual purchasing quantity of the to-be-purchased food material entered by the user; and sending the to-be-purchased food material, the actual purchase price, and the actual purchasing quantity to a household terminal. The to-be-purchased food material, the actual purchase price, and the actual purchasing quantity are sent to a household terminal, so that the food material purchased by the user can be recorded at the household terminal without entering the to-be-purchased food material, the actual purchase price, and the actual purchasing quantity again by the user, that is, the new purchased food material can be recorded without needing to add user operations, thereby reducing repeated operations and improving the convenience.

It should be further noted that, in this embodiment, after the reference price is obtained, the purchasing assisting method further includes: sending the to-be-purchased food material, the location data, and an actual purchase price of the to-be-purchased food material entered by the user to the price database, to update and improve the price database to provide a data foundation to the user for purchasing again in the future or to another user for purchasing.

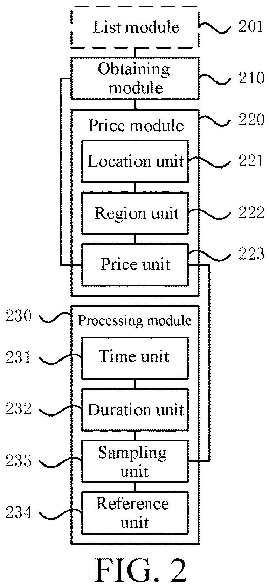

Correspondingly, the present invention further provides a purchasing assisting device. FIG. 2 is a functional block diagram of an embodiment of a purchasing assisting device according to the present invention.

The purchasing assisting device includes: an obtaining module (210), the obtaining module obtaining a to-be-purchased food material;
a price module (220), the price module obtaining price data based on the to-be-purchased food material and location data and according to a price database, the price data including the to-be-purchased food material and an actual price of the to-be-purchased food material;
and a processing module (230), the processing module obtaining a reference price of the to-be-purchased food material according to the price data.

The to-be-purchased food material is a purchase target of a user. In this embodiment, the purchasing assisting device further includes: a list module (201), the list module obtaining a shopping list, the shopping list including at least one to-be-purchased food material; and the obtaining module (210) obtaining the to-be-purchased food material from the list module (201).

The user may make a purchase plan in advance to generate and save the shopping list; the obtaining module (210) is connected to the list module (201), obtains the shopping list from the list module (201), and obtains the to-be-purchased food material according to the obtained shopping list, so that the efficiency of purchasing behavior of the user is effectively improved, thereby facilitating saving time. In other embodiments of the present invention, the to-be-purchased food material may be directly manually entered by the user, that is, the obtaining module obtains the to-be-purchased food material entered by the user.

The price data is a data foundation for obtaining the reference price of the to-be-purchased food material. The price data includes the to-be-purchased food material and at least one actual price. The price database is generated through food material purchasing behavior of all users. Specifically, the price database includes food materials purchased by all the users and actual prices corresponding to the food materials.

Therefore, the price module (220) is connected to the obtaining module (210) and obtains the to-be-purchased food material from the obtaining module (210); and the price data (220) is further applicable to obtain the price database, and query the price database according to the to-be-purchased food material to obtain all actual prices of the to-be-purchased food material.

In addition, the price data (220) is price data in a target region; and the price database further includes: a purchasing location corresponding to the actual price. Therefore, the price module (220) includes: a location unit (221), the location unit (221) obtaining the location data; and a region unit (222), the region unit (222) obtaining the target region based on the location data.

Specifically, the location unit (221) includes a positioning device to obtain the location data. In other embodiments of the present invention, the location unit may alternatively obtain the location data manually entered by a user.

In this embodiment, the target region is a circular area with a location indicated by the location data as the center and a preset comparison radius as the radius; the region unit (222) is connected to the location unit (221) and obtains the location information from the location unit (221); and the comparison radius is further prestored in the region unit (222), and the region unit (222) obtains the target region based on the location data in combination with the preset comparison radius.

The price module (220) further includes: a price unit (223), the price unit (223) obtaining the price data based on the to-be-purchased food material and the target region and according to the price database, the purchasing location that corresponds to the actual price in the price data being located in the target region.

The price unit (223) is connected to the obtaining module (210) and obtains the to-be-purchased food material from the obtaining module (210); the price unit (223) is further applicable to obtain the price database; the price unit (223) queries the price database according to the to-be-purchased food material, to obtain all the actual prices of the to-be-purchased food material; the price unit (223) is further connected to the region unit (222) and obtains the target region from the region unit (222); and the price unit (223) obtains the price data according to the target region, the purchasing location that corresponds to the actual price in the price data being located in the target region.

It should be noted that, in this embodiment, the to-be-purchased food material is obtained by obtaining the shopping list, and the shopping list includes one or more to-be-purchased food materials, so that the price unit (223) may obtain price data of the plurality of to-be-purchased food materials at the same time. In other embodiments of the present invention, the price unit may alternatively obtain price data of the to-be-purchased food materials one by one.

The reference price is applicable to provide a reference for user bargaining, thereby assisting in purchasing behavior for the user.

The reference price is an average price of the to-be-purchased food material in the target region in a preset period of time. The price data further includes: a purchasing time corresponding to the actual price. Therefore, the processing module (230) includes: a time unit (231), the time unit (231) obtaining a current date; a duration unit (232), the duration unit (232) obtaining a valuation period according to the current date and a preset valuation duration; a sampling unit (233), the sampling unit (233) obtaining a plurality of sample prices of the to-be-purchased food material according to the price data and the valuation period, and the sample price being an actual price of the to-be-purchased food material when a purchasing time is within the valuation period; and a reference unit (234), the reference unit (234) obtaining the reference price according to the plurality of sample prices.

In this embodiment, the reference price is an average price of the plurality of sample prices, that is, the reference unit (234) obtains the reference price according to an average value of the plurality of sample prices. In other embodiments of the present invention, the reference price may alternatively be obtained according to other statistical methods of the plurality of sample prices.

The duration unit (232) is connected to the time unit (231) and obtains the current date from the time unit (231); and the duration unit (232) obtains a valuation period before the current date according to the current date and the valuation duration.

In this embodiment, the duration unit (232) prestores a plurality of valuation durations. Specifically, the valuation durations prestored in the duration unit (232) include: one day, three days, and one week. Therefore, the duration unit (232) obtains a corresponding valuation period based on the current date and according to each valuation duration. Specifically, the valuation periods obtained by the duration unit (232) include: within one day before the current date, within three days before the current date, and within one week before the current date.

The sampling unit (233) is connected to the duration unit (232) and obtains the valuation period from the duration unit (232); the sampling unit (233) is further connected to the price unit (223) and obtains the price data from the price unit (223); and the sampling unit (233) obtains the sample price according to the valuation period and the price data.

Specifically, the valuation periods obtained by the duration unit (232) include: within one day before the current date, within three days before the current date, and within one week before the current date. Therefore, the sampling unit (233) obtains a plurality of first sample prices, the first sample prices being actual prices of the to-be-purchased food material when purchasing times are within one day before the current date; the sampling unit (233) obtains a plurality of second sample prices, the second sample prices being actual prices of the to-be-purchased food material when purchasing times are within three days before the current date; the sampling unit (233) obtains a plurality of third sample prices, the third sample prices being actual prices of the to-be-purchased food material when purchasing times are within one week before the current date.

The reference unit (234) is connected to the sampling unit (233) and obtains the plurality of sample prices from the sampling unit (233), and the reference unit (234) obtains the reference price according to the plurality of sample prices.

Specifically, the reference unit (234) obtains a first reference price according to an average value of the plurality of first sample prices; the reference unit (234) obtains a second reference price according to an average value of the plurality of second sample prices; and the reference unit (234) obtains a third reference price according to an average value of the plurality of third sample prices.

In this embodiment, the purchasing assisting device is part of an interactive terminal, and communicates with the user by using a touchscreen or a voice system of the interactive terminal. Therefore, the reference unit (234) is further connected to a display screen or the voice system of the interactive terminal, and the reference unit (234) informs, by using the interactive terminal, the user about the reference price through display or voice. Specifically, the reference unit (234) sends the first reference price, the second reference price, and the third reference price to the display screen of the interactive terminal for displaying. It should be noted that, the interactive terminal may be a mobile interactive terminal, which may be a mobile phone, a tablet, or another mobile electronic device.

In addition, in this embodiment, the purchasing assisting device further includes: an updating module (not shown), the updating module obtaining an actual purchase price of the to-be-purchased food material entered by the user and an actual purchasing quantity of the to-be-purchased food material entered by the user; and a synchronization module (not shown), the synchronization module sending the to-be-purchased food material, the actual purchase price, and the actual purchasing quantity to a personal user account at a cloud service.

Specifically, the synchronization module is connected to the updating module and obtains the actual purchase price and the actual purchasing quantity from the updating module; the synchronization module is connected to the obtaining module (210) and obtains the to-be-purchased food material from the obtaining module (210); the synchronization module is further connected to the cloud service and sends the to-be-purchased food material, the actual purchase price, and the actual purchasing quantity to the personal account at the cloud service, so that the behavior of purchasing the food material by the user is recorded in the personal account at the cloud service, to help the user to query relevant data.

In addition, the synchronization module is further connected to a household terminal. The synchronization module sends the to-be-purchased food material, the actual purchase price, and the actual purchasing quantity to the household terminal, so that the food material purchased by the user can be recorded at the household terminal without entering the to-be-purchased food material, the actual purchase price, and the actual purchasing quantity again by the user, that is, the new purchased food material can be recorded without needing to add user operations, thereby reducing repeated operations and improving the convenience.

It should be further noted that, the synchronization module is further connected to the location unit (221) and obtains the location data from the location unit (221); and the synchronization module sends the to-be-purchased food material, the location data, and the actual purchase price to the price database, to update and improve the price database to provide a data foundation to the user for purchasing again in the future or to another user for purchasing.

Correspondingly, the present invention further provides a purchasing assisting system, including the purchasing assisting device provided in the present invention.

Because the purchasing assisting device is provided in the present invention, for a specific technical solution of the purchasing assisting device, refer to the foregoing embodiment of the purchasing assisting device. Details are not described herein again.

The purchasing assisting system further includes: a cloud service connected to the purchasing assisting device.

In this embodiment, the price database is stored at the cloud service, to reduce space occupied by the purchasing assisting device and reduce operating load.

The purchasing assisting system further includes: a household terminal connected to the purchasing assisting device.

In this embodiment, the household terminal is connected to the cloud service and is connected to the purchasing assisting device by using the cloud service. In other embodiments of the present invention, the household terminal may alternatively be directly connected to the purchasing assisting device.

It should be noted that, both the cloud service and the household terminal may be connected to the purchasing assisting device in a network connection manner.

Although the present invention is disclosed as above, the present invention is not limited thereto. A person skilled in the art may make various changes and modifications without departing from the scope of the present invention as set forth in the appended claims.

## Claims

1. A purchasing assisting method, **characterized by** the steps of:
obtaining a to-be-purchased food material;
retrieving price data from a price database based on the to-be-purchased food material and location data, wherein the price data comprises the to-be-purchased food material and a current price of the to-be-purchased food material; and
determining a reference price of the to-be-purchased food material based on the price data.

2. The purchasing assisting method according to claim 1, **characterized in that** the price database comprises: a food material, a current price of the food material, and a purchasing location corresponding to the current price; and
the step of retrieving price data comprises:
obtaining the location data;
obtaining a target region based on the location data; and
retrieving the price data from the price database based on the to-be-purchased food material and the target region, wherein the purchasing location that corresponds to the current price in the price data is located in the target region.

3. The purchasing assisting method according to claim 2, **characterized in that** the step of obtaining a target region comprises: obtaining the target region based on the location data in combination with a preset comparison radius.

4. The purchasing assisting method according to one of the preceding claims, **characterized in that** the price data further comprises: a purchasing time corresponding to the current price; and
the step of determining a reference price of the to-be-purchased food material comprises:
obtaining a current date;
obtaining a valuation period according to the current date and a preset valuation duration;
obtaining a plurality of sample prices of the to-be-purchased food material according to the price data and the valuation period, the sample price being a current price of the to-be-purchased food material when a purchasing time is within the valuation period; and
determining the reference price according to the plurality of sample prices.

5. The purchasing assisting method according to one of the preceding claims, **characterized in that** before the step of obtaining a to-be-purchased food material, the method further comprises obtaining a shopping list, the shopping list comprising at least one to-be-purchased food material; and the step of obtaining a to-be-purchased food material comprises obtaining the to-be-purchased food material based on the shopping list.

6. The purchasing assisting method according to one of the preceding claims, **characterized in that** after the reference price is determined, the method further comprises:
obtaining a current purchase price of the to-be-purchased food material entered by a user and a current purchasing quantity of the to-be-purchased food material entered by the user; and
sending the to-be-purchased food material, the current purchase price, and the current purchasing quantity to a personal user account at a cloud service.

7. The purchasing assisting method according to one of the preceding claims, **characterized in that** after the reference price is determined, the method further comprises:
obtaining a current purchase price of the to-be-purchased food material entered by a user and a current purchasing quantity of the to-be-purchased food material entered by the user; and
sending the to-be-purchased food material, the current purchase price, and the current purchasing quantity to a household terminal.

8. The purchasing assisting method according to one of the preceding claims, **characterized in that** after the reference price is determined, the method further comprises:
sending the to-be-purchased food material, the location data, and a current purchase price of the to-be-purchased food material entered by a user to the price database.

9. A purchasing assisting device, **characterized by** comprising:
an obtaining module (210) for obtaining a to-be-purchased food material;
a price module (220) for retrieving price data from a price database based on the to-be-purchased food material and location data, wherein the price data comprises the to-be-purchased food material and a current price of the to-be-purchased food material; and
a processing module (230) for determining a reference price of the to-be-purchased food material based on the price data.

10. The purchasing assisting device according to claim 9, **characterized in that** the price database comprises: a food material, a current price of the food material, and a purchasing location corresponding to the current price; and
the price module (220) comprises:
a location unit (221) for obtaining the location data;
a region unit (222) for obtaining a target region based on the location data; and
a price unit (223) for retrieving the price data from a price database based on the to-be-purchased food material and the target region, wherein the purchasing location that corresponds to the current price in the price data is located in the target region.

11. The purchasing assisting device according to claim 10, **characterized in that** the region unit obtains the target region based on the location data in combination with a preset comparison radius.

12. The purchasing assisting device according to one of the claims 9 to 11, **characterized in that** the price data further comprises: a purchasing time corresponding to the current price; and
the processing module (230) comprises:
a time unit (231) for obtaining a current date;
a duration unit (232) for obtaining a valuation period according to the current date and a preset valuation duration;
a sampling unit (233) for obtaining a plurality of sample prices of the to-be-purchased food material according to the price data and the valuation period, and the sample price being a current price of the to-be-purchased food material when a purchasing time is within the valuation period; and
a reference unit (234) for obtaining the reference price according to the plurality of sample prices.

13. The purchasing assisting device according to one of the claims 9 to 12, **characterized by** further comprising a list module for obtaining a shopping list, the shopping list comprising at least one to-be-purchased food material; wherein the obtaining module (210) is adapted to obtain the to-be-purchased food material from the list module.

14. The purchasing assisting device according to one of the claims 9 to 13, **characterized by** further comprising:
an updating module for obtaining a current purchase price of the to-be-purchased food material entered by a user and a current purchasing quantity of the to-be-purchased food material entered by the user; and
a synchronization module for sending the to-be-purchased food material, the current purchase price, and the current purchasing quantity to a personal user account at a cloud service.

15. The purchasing assisting device according to one of the claims 9 to 14, **characterized by** further comprising:
an updating module for obtaining a current purchase price of the to-be-purchased food material entered by a user and a current purchasing quantity of the to-be-purchased food material entered by the user; and
a synchronization module for sending the to-be-purchased food material, the current purchase price, and the current purchasing quantity to a household terminal.
